# FASCICULE DE BREVET EUROPEEN

(11) **EP 3 886 663 B1**
(45) Date de publication et mention de la délivrance du brevet: **16.11.2022**
(21) Numéro de dépôt: 19806249.9
(22) Date de dépôt: 22.11.2019
(51) Int. Cl.: A47J 45/06

(54) **RECIPIENT DE CUISSON MUNI D'UNE POIGNEE TUBULAIRE FROIDE**
MIT EINEM KALTEN ROHRFÖRMIGEN GRIFF AUSGESTATTETES KOCHGEFÄSS
COOKING VESSEL PROVIDED WITH A COLD TUBULAR HANDLE

(30) Priorité: 30.11.2018 FR 1872135
(43) Date de publication de la demande: 06.10.2021
(73) Titulaire: SEB S.A., 69130 Ecully (FR)
(72) Inventeur: GUEGAN, Laurent, 74150 LORNAY (FR)
(74) Mandataire: SEB Développement
(86) Numéro de dépôt international: PCT/EP2019/082316
(87) Numéro de publication internationale: WO 2020/109183

(56) Documents cités:
- EP-A2- 0 240 225
- GB-A- 168 062
- US-A- 5 121 848

## Description

La présente invention concerne un récipient de cuisson destiné à la cuisson d'aliments et qui comporte une poignée tubulaire, notamment une poêle, une casserole ou une sauteuse. Un tel récipient de cuisson est destiné à être posé sur une source de chauffe notamment un réchaud à gaz.

On connait du document EP0240225 une poignée destinée à être fixée sur une paroi latérale d'un récipient de cuisson. La poignée comporte une partie de fixation prolongée par une partie de préhension tubulaire qui s'étend radialement à la paroi selon une direction longitudinale et qui présente une extrémité libre munie d'un orifice. Le document US 5121848 A montre également une poignée selon le préambule de la revendication 1.

La partie de préhension tubulaire comporte une extrémité de fixation et l'extrémité de fixation comporte une paroi inférieure munie d'une première ouverture traversante et une paroi supérieure munie d'une deuxième ouverture traversante. Les première et deuxième ouvertures sont agencées de manière adjacente à la paroi latérale. Lors d'une cuisson sur une source de chauffe notamment un réchaud à gaz, des courants chauds ascendants qui progressent le long de la paroi latérale à l'endroit où la poignée est fixée traversent les première et deuxième ouvertures. Une partie de ces courants chauds peut être déviée après le passage dans la première ouverture à l'intérieur de la partie de préhension tubulaire pour ressortir par l'orifice de l'extrémité libre.

Ainsi, la zone de préhension peut s'échauffer pendant la cuisson et atteindre une température excessive pour qu'un utilisateur puisse la saisir sans des moyens de protection, par exemple un gant.

Le but de la présente invention est de remédier aux inconvénients précités et de proposer un récipient de cuisson muni d'une poignée tubulaire présentant une construction optimisée pour permettre à l'utilisateur de le manipuler en toute sécurité, notamment au niveau de la température d'une partie de préhension de la poignée tubulaire.

Un autre but de l'invention est de proposer un récipient de cuisson muni d'une poignée tubulaire qui soit de conception simple et économique à mettre en œuvre.

Ces buts sont atteints avec un récipient de cuisson destiné à être posé sur une source de chauffe, ledit récipient de cuisson comportant une paroi latérale et une poignée fixée sur ladite paroi latérale par des organes de fixation, ladite poignée comportant une partie de préhension tubulaire qui s'étend radialement à la paroi selon une direction longitudinale et qui présente une extrémité de fixation et une extrémité libre munie d'un orifice, l'extrémité de fixation étant fermée par une paroi d'extrémité et l'extrémité de fixation comportant une paroi supérieure munie d'au moins une ouverture traversante agencée de manière adjacente à la paroi latérale de manière à ce que des courants chauds ascendants qui progressent lors d'une cuisson le long de la paroi, à l'endroit où la poignée est fixée, créent une aspiration au niveau de l'au moins une ouverture pour générer un courant d'air depuis l'orifice vers l'intérieur de la partie de préhension tubulaire et ainsi la refroidir, le récipient de cuisson étant caractérisé en ce que l'extrémité de fixation comporte une paroi inférieure fermée.

La température de la partie de préhension de la poignée est donc maintenue à un niveau suffisamment bas par le courant d'air frais qui circule dans la poignée tubulaire pour qu'un utilisateur puisse saisir la partie de préhension sans moyens de protection, à tout moment de la cuisson.

Avantageusement, l'au moins une ouverture s'étend selon la direction longitudinale sur au moins 5 millimètres, de préférence sur au moins 10 millimètres.

Ainsi, l'au moins une ouverture comporte deux cotés qui s'étendent le long de la direction longitudinale, chaque côté créant une zone de décrochage des courants chauds ascendants qui progressent lors d'une cuisson le long de la paroi latérale et autour de l'extrémité de fixation de la partie de préhension tubulaire pour générer une dépression au-dessus de l'ouverture traversante.

De manière avantageuse, la poignée comporte un plan de symétrie vertical qui s'étend le long de la direction longitudinale. Ainsi, dans le cas où la paroi supérieure n'est munie que d'une seule ouverture traversante, cette ouverture traversante s'étend de part et d'autre du plan de symétrie.

De préférence, l'au moins une ouverture traversante présente une surface supérieure à 100 mm², de préférence supérieure à 200 mm2.

Une telle surface permet aux courants ascendants de créer une aspiration au niveau de l'au moins une ouverture pour générer un courant d'air suffisant à l'intérieur de la partie de préhension tubulaire pour la refroidir à un niveau de température acceptable pour la préhension à main nue.

Avantageusement, l'au moins une ouverture traversante présente une forme de trapèze dont une base forme une partie antérieure de l'au moins une ouverture traversante qui est adjacente à la paroi latérale.

De manière avantageuse, la forme de trapèze comporte une grande base et une petite base, la grande base étant adjacente à la paroi latérale.

De préférence, la forme de trapèze comporte deux cotés qui s'étendent le long de la direction longitudinale, chaque côté créant une zone de décrochage des courants chauds ascendants qui progressent lors d'une cuisson le long de la paroi latérale et autour de l'extrémité de fixation de la partie de préhension tubulaire pour générer une dépression au-dessus de l'ouverture traversante.

Avantageusement, la paroi d'extrémité est formée par la paroi latérale.

Cette disposition permet d'obtenir une poignée mettant en œuvre peu de matière et donc très économique.

De préférence, l'extrémité de fixation comporte une collerette qui s'étend transversalement à la direction longitudinale, l'au moins une ouverture traversante étant agencée entre la paroi latérale et la collerette de manière à ce que les courants chauds ascendants soient canalisés vers l'au moins une ouverture traversante.

Ainsi, les courants ascendants créent une aspiration plus importante au niveau de l'au moins une ouverture, et donc un courant d'air plus important à l'intérieur de la partie de préhension tubulaire pour mieux la refroidir.

Avantageusement, la collerette s'étend sur toute une périphérie de l'extrémité de fixation.

De préférence, les organes de fixation comportent deux pattes latérales.

Avantageusement, la partie de préhension tubulaire est réalisée en acier inoxydable austénitique.

L'acier inoxydable austénitique présente une faible conductivité thermique qui permet de ralentir le flux thermique par conduction vers la partie de préhension.

De préférence, la partie de préhension tubulaire présente une épaisseur inférieure à 3 millimètres, de préférence inférieure à 2 millimètre.

Cette disposition permet d'obtenir un bon compromis entre une épaisseur la plus fine possible pour des raisons thermiques et une épaisseur suffisante pour une bonne tenue mécanique.

De préférence, la partie de préhension ne comporte qu'une ouverture traversante entre la paroi latérale sur laquelle est fixée l'extrémité de fixation et l'orifice.

Avantageusement, le récipient de cuisson est une poêle, une casserole ou une sauteuse.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig 1] La figure 1 est une vue en perspective d'un récipient de cuisson muni d'une poignée tubulaire selon un mode particulier de réalisation de l'invention,
[Fig 2] La figure 2 est une vue en perspective de la poignée tubulaire illustrée à la figure 1,
[Fig 3] La figure 3 est une vue en coupe suivant le plan de coupe III du récipient de cuisson muni de la poignée tubulaire illustré à la figure 1.

On notera que, dans ce document, les termes «horizontal», «vertical», «inférieur», «supérieur», «longitudinal», «transversal», «haut», «bas», employés pour décrire le récipient de cuisson muni de la poignée, font référence à ce récipient de cuisson en situation d'usage, lorsqu'il est posé sur un plan horizontal.

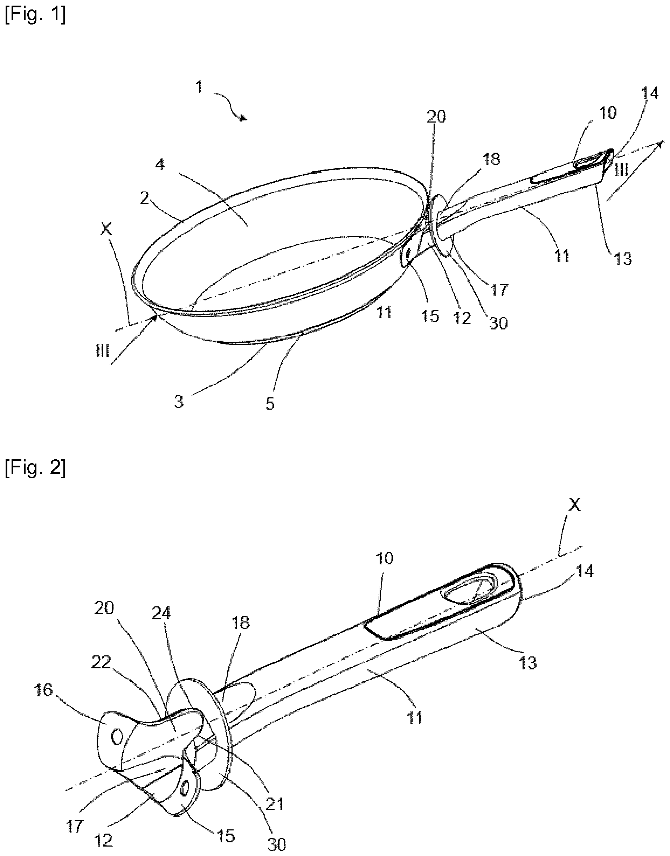

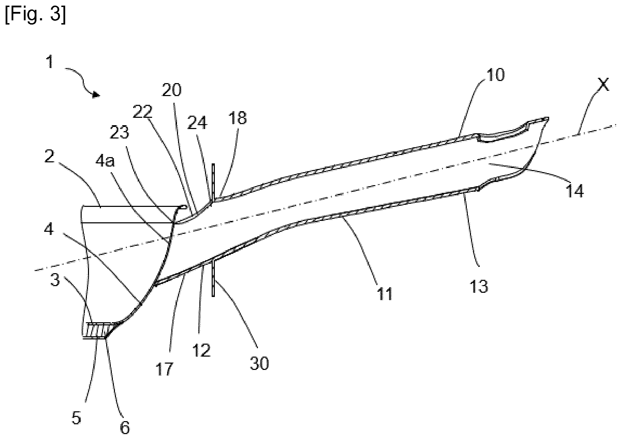

Tel que visible aux figures 1 à 3, un récipient de cuisson 1 comporte une calotte 2 comprenant un fond 3 et une paroi latérale 4. La calotte 2 est réalisée en acier inoxydable, par exemple par frappe d'un disque. Le fond 3 comporte une coupelle 5 en acier inoxydable qui renferme une partie 6 en aluminium destinée à répartir la chaleur (Fig.3). Le récipient de cuisson 1 est conçu pour assurer la cuisson de différents aliments sous l'effet d'une source de chauffe externe. Le récipient de cuisson 1 comporte une poignée 10 agencée sur la paroi latérale 4. Le récipient de cuisson 1 présente ainsi un caractère portatif, c'est-à-dire qu'il peut être déplacé manuellement.

La poignée 10 comporte une partie de préhension tubulaire 11 qui s'étend radialement à la paroi latérale 4 selon une direction longitudinale X. La partie de préhension tubulaire 11 présente une extrémité de fixation 12 et une extrémité libre 13 munie d'un orifice 14. La partie de préhension tubulaire 11 présente une section transversale à la direction longitudinale X sensiblement constante. L'orifice 14 présente une surface S1 équivalente à la section transversale.

L'extrémité de fixation 12 comporte deux pattes latérales 15, 16 qui forment des organes de fixation à la paroi latérale 4. Les deux pattes latérales 15, 16 s'étendent transversalement à la direction longitudinale X et sont fixées à la paroi latérale 4 par rivetage. La paroi latérale 4 forme une paroi d'extrémité 4a qui ferme l'extrémité de fixation 12.

L'extrémité de fixation 12 comporte une paroi inférieure 17 fermée et une paroi supérieure 18 munie d'une ouverture traversante 20 agencée de manière adjacente à la paroi latérale 4. La paroi inférieure 17 et la paroi supérieure 18 forment respectivement la moitié de l'extrémité de fixation 12 de la partie de préhension tubulaire 11. La poignée 10, notamment l'extrémité de fixation 12, comporte un plan de symétrie vertical passant par la direction longitudinale X. L'ouverture traversante 20 présente deux cotés 21, 22 qui s'étendent le long de la direction longitudinale X sur 20 millimètres. L'ouverture traversante 20 comporte une partie antérieure 23 fermée par la paroi latérale 4 et une partie postérieure 24 arrondie.

L'ouverture traversante 20 s'étend de part et d'autre du plan de symétrie vertical passant par la direction longitudinale X sur une distance moyenne Z égale à 10 millimètres. L'ouverture traversante 20 présente une surface S2 = X × Z égale à 200 mm².

De manière avantageuse, le rapport de la surface S1 de l'orifice 14 sur la surface S2 de l'ouverture traversante 20 est inférieur à 1,2. Dans ce mode de réalisation, le rapport S2/S1 est égal à 1.

La poignée 10, notamment la partie de préhension tubulaire 11 est réalisée à partir d'une tôle en acier inoxydable, de préférence en acier inoxydable austénitique. La poignée 10 ainsi que la partie de préhension tubulaire 11 présente donc une épaisseur sensiblement constante égale à 1,2 mm.

Lors d'une cuisson, notamment sur un réchaud à gaz, des courants d'air chauds ascendants formés notamment par les gaz de combustion progressent le long de la paroi latérale 4, en particulier au niveau de l'extrémité de fixation 12 de la partie de préhension tubulaire 11. L'écoulement des courants d'air chauds crée une surpression sur la paroi inférieure 17 et une dépression sur la paroi supérieure 18 où est positionnée l'ouverture traversante 20. Ainsi, un courant d'air est généré depuis l'orifice 14 vers l'ouverture traversante 20, en passant par l'intérieur de la partie de préhension tubulaire 11. L'air capté au niveau de l'orifice 14 étant plus frais, la partie de préhension tubulaire 11 se trouve refroidie.

Il existe un test normatif imposant des limites de température à ne pas dépasser sur la poignée d'un récipient de cuisson utilisé sur un réchaud à gaz.

Pour une poignée métallique, cette limite est fixée à 55°C suivant un protocole détaillé dans la norme EN 12983-1 (Annexe F). Au-delà de cette température de 55°C, le fabriquant doit indiquer à l'utilisateur qu'il faut utiliser un moyen de protection thermique du type gant ou manique pour saisir la poignée.

La demanderesse a réalisé des mesures de température à différents points de mesure sur la partie de préhension tubulaire 11 d'une poêle de diamètre 24 cm sur un bruleur à gaz de diamètre 7,5 cm. La poêle est remplie avec 1, 5 litre d'eau et le débit de gaz est établi à 185 L/h. Dans ces conditions, on compare les températures à un point correspondant à 1/3 de la longueur de la poignée, en partant de la paroi latérale, pour une poignée standard correspondant à la construction décrite dans le document EP0240225 et pour une poignée améliorée présentant la construction ci-dessus. La poignée 10 améliorée présente une température inférieure de 9 °C par rapport à la poignée standard.

Dans une variante de réalisation, l'extrémité de fixation 12 comporte une collerette 30 qui s'étend transversalement à la direction longitudinale X, dans un plan sensiblement vertical. L'ouverture traversante 20 est agencée sur la paroi supérieure 18 de l'extrémité de fixation 12, entre la paroi latérale 4 et la collerette 30. Ainsi, les courants chauds ascendants qui circulent le long de la paroi latérale 4 inclinée sont concentrés vers l'ouverture traversante 20.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention, tel que défini par les revendications.

Dans une variante de réalisation, la paroi d'extrémité qui ferme l'extrémité de fixation 12 fait partie de la partie de préhension tubulaire 11. Ainsi la zone de raccordement entre la paroi d'extrémité et l'extrémité de fixation 12 ne comporte aucune fuite.

## Revendications

1. Récipient de cuisson (1) destiné à être posé sur une source de chauffe, ledit récipient de cuisson (1) comportant une paroi latérale (4) et une poignée (10) fixée sur ladite paroi latérale (4) par des organes de fixation (15, 16), ladite poignée (10) comportant une partie de préhension tubulaire (11) qui s'étend radialement à la paroi latérale (4) selon une direction longitudinale X et qui présente une extrémité de fixation (12) et une extrémité libre (13) munie d'un orifice (14), l'extrémité de fixation (12) étant fermée par une paroi d'extrémité (4a), l'extrémité de fixation (12) comportant une paroi supérieure (18) munie d'au moins une ouverture traversante (20) agencée de manière adjacente à la paroi latérale (4) de manière à ce que des courants chauds ascendants qui progressent lors d'une cuisson le long de la paroi latérale (4), à l'endroit où la poignée (10) est fixée, créent une aspiration au niveau de l'au moins une ouverture (20) pour générer un courant d'air depuis l'orifice (14) vers l'intérieur de la partie de préhension tubulaire (11) et ainsi la refroidir, le récipient de cuisson étant **caractérisé en ce que** l'extrémité de fixation (12) comporte une paroi inférieure fermée (17).

2. Récipient de cuisson (1) selon la revendication 1, **caractérisé en ce que** l'au moins une ouverture traversante (20) s'étend selon la direction longitudinale X sur au moins 5 millimètres, de préférence sur au moins 10 millimètres.

3. Récipient de cuisson (1) selon l'une quelconque des revendications 1 à 2, **caractérisé en ce que** l'au moins une ouverture traversante (20) présente une surface supérieure à 100 mm², de préférence supérieure à 200 mm².

4. Récipient de cuisson (1) selon l'une quelconque des revendications 1 à 3, **caractérisé en ce que** l'au moins une ouverture traversante (20) présente une forme de trapèze dont une base forme une partie antérieure (23) de l'au moins une ouverture traversante (20) qui est adjacente à la paroi latérale (4).

5. Récipient de cuisson (1) selon la revendication 4, **caractérisé en ce que** la forme de trapèze comporte deux cotés (21, 22) qui s'étendent le long de la direction longitudinale X, chaque coté (21, 22) créant une zone de décrochage des courants chauds ascendants qui progressent lors d'une cuisson le long de la paroi latérale (4) et autour de l'extrémité de fixation (12) de la partie de préhension tubulaire (11) pour générer une dépression au-dessus de l'ouverture traversante (20).

6. Récipient de cuisson (1) selon l'une quelconque des revendications 1 à 5, **caractérisé en ce que** la paroi d'extrémité (4a) est formée par la paroi latérale (4).

7. Récipient de cuisson (1) selon l'une quelconque des revendications 1 à 6, **caractérisé en ce que** l'extrémité de fixation (12) comporte une collerette (30) qui s'étend transversalement à la direction longitudinale X, l'au moins une ouverture traversante (20) étant agencée entre la paroi latérale (4) et la collerette (30) de manière à ce que les courants chauds ascendants soient canalisés vers l'au moins une ouverture traversante (20).

8. Récipient de cuisson (1) selon la revendication 7, **caractérisé en ce que** la collerette (30) s'étend sur toute la périphérie de l'extrémité de fixation (12).

9. Récipient de cuisson (1) selon la revendication 8, **caractérisé en ce que** les organes de fixation comportent deux pattes latérales (15, 16).

10. Récipient de cuisson (1) selon l'une quelconque des revendications 1 à 9, **caractérisé en ce que** la partie de préhension tubulaire (11) est réalisée en acier inoxydable austénitique.

11. Récipient de cuisson (1) selon la revendication 10, **caractérisé en ce que** la partie de préhension tubulaire (11) présente une épaisseur inférieure à 3 millimètres, de préférence inférieure à 2 millimètres.

12. Récipient de cuisson (1) selon l'une quelconque des revendications 1 à 11, **caractérisé en ce que** la partie de préhension tubulaire (11) ne comporte qu'une ouverture traversante (20) entre la paroi latérale (4) sur laquelle est fixée l'extrémité de fixation (12) et l'orifice (14).

13. Récipient de cuisson (1) selon l'une quelconque des revendications 1 à 12, **caractérisé en ce qu'**il est une poêle, une casserole ou une sauteuse.

## Patentansprüche

1. Kochgefäß (1), das dazu bestimmt ist, auf einer Wärmequelle abgestellt zu werden, wobei das Kochgefäß (1) eine Seitenwand (4) und einen Griff (10) umfasst, der an der Seitenwand (4) durch Befestigungsorgane (15, 16) befestigt ist, wobei der Griff (10) einen rohrförmigen Greifteil (11) umfasst, der sich radial an der Seitenwand (4) in einer Längsrichtung X erstreckt, und der ein Befestigungsende (12) und ein freies Ende (13) aufweist, das mit einer Öffnung (14) versehen ist, wobei das Befestigungsende (12) durch eine Endwand (4a) geschlossen ist, das Befestigungsende (12) eine obere Wand (18) umfasst, die mit mindestens einer durchgehenden Öffnung (20) versehen ist, die angrenzend an die Seitenwand (4) angeordnet ist, sodass aufsteigende heiße Ströme, die beim Kochen entlang der Seitenwand (4) an der Stelle voranschreiten, an der der Griff (10) befestigt ist, eine Absaugung im Bereich der mindestens einen Öffnung (20) bilden, um einen Luftstrom aus der Öffnung (14) ins Innere des rohrförmigen Greifteils (11) zu generieren, und diesen so abkühlen, wobei das Kochgefäß **dadurch gekennzeichnet ist, dass** das Befestigungsende (12) eine geschlossene untere Wand (17) umfasst.

2. Kochgefäß (1) nach Anspruch 1, **dadurch gekennzeichnet, dass** sich die mindestens eine durchgehende Öffnung (20) in der Längsrichtung X über mindestens 5 Millimeter, vorzugsweise über mindestens 10 Millimeter erstreckt.

3. Kochgefäß (1) nach einem der Ansprüche 1 bis 2, **dadurch gekennzeichnet, dass** die mindestens eine durchgehende Öffnung (20) eine Fläche von mehr als 100 mm², vorzugsweise mehr als 200 mm²aufweist.

4. Kochgefäß (1) nach einem der Ansprüche 1 bis 3, **dadurch gekennzeichnet, dass** die mindestens eine durchgehende Öffnung (20) eine Trapezform aufweist, von der eine Basis einen vorderen Teil (23) der mindestens einen durchgehenden Öffnung (20) bildet, die an die Seitenwand (4) angrenzend ist.

5. Kochgefäß (1) nach Anspruch 4, **dadurch gekennzeichnet, dass** die Trapezform zwei Seiten (21, 22) umfasst, die sich entlang der Längsrichtung X erstrecken, wobei jede Seite (21,22) eine Absetzzone für die aufsteigenden heißen Ströme bildet, die beim Kochen entlang der Seitenwand (4) und um das Befestigungsende (12) des rohrförmigen Greifteils (11) herum voranschreiten, um einen Unterdruck oberhalb der durchgehenden Öffnung (20) zu erzeugen.

6. Kochgefäß (1) nach einem der Ansprüche 1 bis 5, **dadurch gekennzeichnet, dass** die Endwand (4a) durch die Seitenwand (4) gebildet wird.

7. Kochgefäß (1) nach einem der Ansprüche 1 bis 6, **dadurch gekennzeichnet, dass** das Befestigungsende (12) einen Kragenring (30) umfasst, der sich quer zur Längsrichtung X erstreckt, wobei die mindestens eine durchgehende Öffnung (20) zwischen der Seitenwand (4) und dem Halsring (30) angeordnet ist, sodass die aufsteigenden heißen Ströme zu der mindestens einen durchgehenden Öffnung (20) hin kanalisiert werden.

8. Kochgefäß (1) nach Anspruch 7, **dadurch gekennzeichnet, dass** sich der Halsring (30) über den Umfang des Befestigungsendes (12) erstreckt.

9. Kochgefäß (1) nach Anspruch 8, **dadurch gekennzeichnet, dass** die Befestigungsorgane zwei seitliche Laschen (15,16) umfassen.

10. Kochgefäß (1) nach einem der Ansprüche 1 bis 9, **dadurch gekennzeichnet, dass** der rohrförmige Greifteil (11) aus austenitischem nichtrostendem Stahl gefertigt ist.

11. Kochgefäß (1) nach Anspruch 10, **dadurch gekennzeichnet, dass** der rohrförmige Greifteil (11) eine Dicke von weniger als 3 Millimetern, vorzugsweise weniger als 2 Millimetern aufweist.

12. Kochgefäß (1) nach einem der Ansprüche 1 bis 11, **dadurch gekennzeichnet, dass** der rohrförmige Greifteil (11) nur eine durchgehende Öffnung (20) zwischen der Seitenwand (4), an der das Befestigungsende (12) befestigt ist, und der Öffnung (14) umfasst.

13. Kochgefäß (1) nach einem der Ansprüche 1 bis 12, **dadurch gekennzeichnet, dass** es eine Pfanne, ein Kochtopf oder eine Schmorpfanne ist.

## Claims

1. Cooking vessel (1) intended to be placed on a source of heat, said cooking vessel (1) comprising a side wall (4) and a handle (10) attached to said side wall (4) by attachment members (15, 16), said handle (10) comprising a tubular gripping part (11) extending radially to the side wall (4) in a longitudinal direction X and having an attachment end (12) and a free end (13) provided with an aperture (14), the attachment end (12) being closed by an end wall (4a), the attachment end (12) comprising an upper wall (18) provided with at least one through opening (20) arranged so as to be adjacent to the side wall (4) so that rising hot currents that travel during cooking along the side wall (4), at the place where the handle (10) is attached, create suction at the at least one opening (20) to generate an airflow from the aperture (14) to the interior of the tubular gripping part (11) and thereby cool the latter, the cooking vessel being **characterised in that** the attachment end (12) has a closed bottom wall (17).

2. Cooking vessel (1) according to claim 1, **characterised in that** the at least one through opening (20) extends in the longitudinal direction X for at least 5 mm, preferably for at least 10 mm.

3. Cooking vessel (1) according to any of claims 1 to 2, **characterised in that** the at least one through opening (20) has a surface area of more than 100 mm², preferably more than 200 mm².

4. Cooking vessel (1) according to any of claims 1 to 3, **characterised in that** at least one through opening (20) has a trapezoidal shape a base of which forms a front part (23) of the at least one through opening (20), which front part is adjacent to the sidewall (4).

5. Cooking vessel (1) according to claim 4, **characterised in that** the trapezoidal shape comprises two sides (21, 22) extending in the longitudinal direction X, each side (21, 22) creating a zone for releasing the rising hot currents that travel during cooking along the side wall (4) and around the attachment end (12) of the tubular gripping part (11) to generate a negative pressure above the through opening (20).

6. Cooking vessel (1) according to any of claims 1 to 5, **characterised in that** the end wall (4a) is formed by the side wall (4).

7. Cooking vessel (1) according to any of claims 1 to 6, **characterised in that** the attachment end (12) comprises a collar (30) extending transversely to the longitudinal direction X, the at least one through opening (20) being arranged between the side wall (4) and the collar (30) so that the rising hot currents are channelled to the at least one through opening (20).

8. Cooking vessel (1) according to claim 7, **characterised in that** the collar (30) extends over the full periphery of the attachment end (12).

9. Cooking vessel (1) according to claim 8, **characterised in that** the attachment members comprise two side tabs (15, 16).

10. Cooking vessel (1) according to any of claims 1 to 9, **characterised in that** the tubular gripping part (11) is produced from austenitic stainless steel.

11. Cooking vessel (1) according to claim 10, **characterised in that** the tubular gripping part (11) has a thickness of less than 3 mm, preferably less than 2 mm.

12. Cooking vessel (1) according to any of claims 1 to 11, **characterised in that** the tubular gripping part (11) comprises only one through opening (20) between the side wall (4) to which the attachment end (12) is attached and the aperture (14).

13. Cooking vessel (1) according to any of claims 1 to 12, **characterised in that** it is a pan, a saucepan or a frying pan.
